# EUROPÄISCHE PATENTSCHRIFT

(11) **EP 3 791 057 B1**
(45) Veröffentlichungstag und Bekanntmachung des Hinweises auf die Patenterteilung: **12.01.2022**
(21) Anmeldenummer: 19722047.8
(22) Anmeldetag: 30.04.2019
(51) Int. Cl.: F02M 21/02, F02D 19/02, F02D 19/06, F16K 31/124, F16K 11/16

(54) **VENTILANORDNUNG ZUR GASDRUCKREGELUNG IN EINEM GAS-RAIL**
VALVE ASSEMBLY FOR GAS PRESSURE CONTROL IN A GAS RAIL
ENSEMBLE FORMANT SOUPAPE SERVANT À RÉGULER LA PRESSION DE GAZ DANS UNE RAMPE DE DISTRIBUTION DE GAZ

(30) Priorität: 08.05.2018 DE 102018207134
(43) Veröffentlichungstag der Anmeldung: 17.03.2021
(73) Patentinhaber: Robert Bosch GmbH, 70442 Stuttgart (DE)
(72) Erfinder: VAHLE, Dirk, 71735 Eberdingen (DE)
(86) Internationale Anmeldenummer: PCT/EP2019/061039
(87) Internationale Veröffentlichungsnummer: WO 2019/214996

(56) Entgegenhaltungen:
- DE-A1-102016 207 743
- US-A- 4 813 601
- US-A1- 2017 205 126

## Beschreibung

Die Erfindung betrifft eine Ventilanordnung zur Gasdruckregelung in einem Gas-Rail eines Kraftstoffsystems zur Versorgung einer Brennkraftmaschine mit einem gasförmigen Kraftstoff, insbesondere mit Erdgas, mit den Merkmalen des Oberbegriffs des Anspruchs 1.

### Stand der Technik

Aus der Offenlegungsschrift DE 10 2016 207 743 A1 ist ein Kraftstoffsystem zur Versorgung einer Brennkraftmaschine mit einem gasförmigen Brennstoff mit einer Einrichtung zur Zumessung des gasförmigen Brennstoffs zu einem Injektor bekannt. Die Einrichtung umfasst eine Druckregeleinheit mit einem Absperrventil, einem Drucksteuerventil und einem Absteuerventil, die eine Baueinheit bilden. Bei geöffnetem Absperrventil wird gasförmiger Brennstoff zugemessen, wobei der gasförmige Brennstoff zunächst in einen Hochdruckspeicher bzw. in ein Gas-Rail gelangt, an dem mindestens ein Injektor angeschlossen ist. Durch Öffnen des Absteuerventils kann gasförmiger Brennstoff aus dem Gas-Rail abgeführt werden, so dass der Gasdruck im Gas-Rail gesenkt wird. Auf diese Weise ist sichergestellt, dass der Gasdruck im Gas-Rail nicht über einen vorgegebenen Grenzwert steigt. Die Steuerung des Absperrventils und des Absteuerventils erfolgt hydraulisch über den Steuerdruck in einem Steuerraum, der mit einem hydraulischen Druckmittel, und zwar mit Dieselkraftstoff beaufschlagbar ist. Zur Veränderung des Steuerdrucks im Steuerraum ist ferner ein Dieseldrucksteuerventil vorgesehen, das an einen separaten Dieselkreislauf angeschlossen ist.

Bei einer Druckregeleinheit der vorstehend genannten Art kann es zwischen den unterschiedlichen Druckbereichen, insbesondere im Bereich von Führungen, zu einer Gas-Leckage kommen. Da sich die Gas-Leckage ungünstig auf den Energiehaushalt des Kraftstoffsystems auswirkt, gilt es Maßnahmen zu treffen, welche eine Leckage verhindern. Beispielsweise können in den Führungen Dichtelemente angeordnet werden. Da diese jedoch aufgrund der hohen dynamischen Belastung in der Regel vorzeitig verschleißen, kann auf Dauer eine Leckage nicht unterbunden werden. Dies wirkt sich negativ auf den Wirkungsgrad des Kraftstoffsystems aus.

Der vorliegenden Erfindung liegt die Aufgabe zugrunde, eine Ventilanordnung zur Gasdruckregelung in einem Gas-Rail eines Kraftstoffsystems derart weiterzuentwickeln, dass die vorstehend genannten Nachteile möglichst nicht auftreten.

Zur Lösung der Aufgabe wird die Ventilanordnung mit den Merkmalen des Anspruchs 1 vorgeschlagen. Vorteilhafte Weiterbildungen der Erfindung sind den Unteransprüchen zu entnehmen.

### Offenbarung der Erfindung

Die zur Gasdruckregelung in einem Gas-Rail eines Kraftstoffsystems vorgeschlagene Ventilanordnung umfasst ein erstes Ventil zur Verbindung des Gas-Rails mit einem Gas-Zulauf und ein zweites Ventil zur Verbindung des Gas-Rails mit einem Gas-Rücklauf. Erstes und zweites Ventil sind dabei koaxial angeordnet und zumindest mittelbar über einen gemeinsamen Steuerkolben betätigbar, der einen Steuerraum begrenzt. Zur Betätigung des ersten Ventils wirkt der Steuerkolben erfindungsgemäß mit einem abschnittsweise hülsenförmig ausgeführten Stellglied zusammen, welches das zweite Ventil umgibt und in axialer Richtung überragt. Das abschnittsweise hülsenförmig ausgeführte Stellglied weist auf seiner dem Steuerkolben abgewandten Seite eine Platte auf oder ist mit einer Platte wirkverbunden. Da das abschnittsweise hülsenförmige Stellglied und die Platte einstückig ausgebildet oder zumindest wirkverbunden sind, wird die Platte bei einem Hub des Steuerkolbens durch das Stellglied mitgeführt. Die Platte vermittelt zwischen dem abschnittsweise hülsenförmigen Stellglied und dem ersten Ventil, insbesondere vermag sie die Stellkräfte der einzelnen Führungsstangen des Stellglieds zu bündeln. Dadurch ist eine gleichmäßige Kraftübertragung sichergestellt. Das abschnittsweise hülsenförmig ausgeführte Stellglied ist über die Federkraft einer Feder gegen den Steuerkolben axial vorgespannt. Über die Feder wird die Rückstellung des Stellglieds sichergestellt, so dass die Wirkverbindung zwischen Steuerkolben und Stellglied nur in die der Federkraft entgegengesetzte Richtung bestehen muss.

Weiterhin vorzugsweise ist die Feder an der Platte abgestützt, so dass die Federkraft der Feder mittelbar über die Platte auf das Stellglied übertragen wird.

Das heißt, dass das erste Ventil in einem größeren axialen Abstand zum Steuerkolben angeordnet ist als das zweite Ventil und das abschnittsweise hülsenförmige Stellglied zur Überbrückung des axialen Abstands zwischen dem ersten Ventil und dem Steuerkolben eingesetzt wird. Der Hub des Steuerkolbens wird somit über das abschnittsweise hülsenförmige Stellglied auf das erste Ventil übertragen, und zwar ohne Mitwirkung des zweiten Ventils. Auf diese Weise können beide Ventile weitgehend unabhängig voneinander geschaltet werden, da die Schaltkette vom Steuerkolben auf das erste Ventil nicht über das zweite Ventil, sondern über ein separates Stellglied führt. Auf diese Weise können die unterschiedlichen Druckbereiche einfacher voneinander getrennt werden. Ferner kann auf die Anordnung verschleißanfälliger Dichtelemente in den Führungsbereichen der hubbeweglichen Teile der beiden Ventile verzichtet werden. Damit entfallen auch die eingangs genannten Nachteile und der Wirkungsgrad des Kraftstoffsystems steigt. Mit Wegfall der Dichtelemente in den Führungsbereichen reduzieren sich die Reibkräfte, was die Dynamik der hubbeweglichen Teile steigert.

Bevorzugt wird ein erster Teilhub des Steuerkolbens nur zur Betätigung des zweiten Ventils genutzt, und zwar zum Schließen des zweiten Ventils. Das abschnittsweise hülsenförmige Stellglied führt währenddessen einen Freihub aus. Die Betätigung des ersten Ventils erfolgt dann während eines zweiten Teilhubs des Steuerkolbens, nachdem das abschnittsweise hülsenförmige Stellglied seinen Freihub vollendet hat. Das erste Ventil öffnet während das zweite Ventil geschlossen bleibt, so dass mit Öffnen des ersten Ventils Druck im Gas-Rail aufgebaut wird.

Ferner wird vorgeschlagen, dass das abschnittsweise hülsenförmig ausgeführte Stellglied einen Führungsabschnitt besitzt, der aus mehreren, vorzugsweise in gleichem Winkelabstand zueinander angeordneten Führungsstangen gebildet wird, die einen Ventilkörper durchsetzen, der einen Ventilsitz für das zweite Ventil ausbildet. Die vorzugsweise unmittelbar an einen hülsenförmigen Abschnitt des Stellglieds anschließenden Führungsstangen ermöglichen ein Durchgreifen des Stellglieds durch den Ventilkörper ohne dabei den Gas-Rücklauf zu schneiden. Die unterschiedlichen Druckbereiche blieben somit getrennt, so dass auf diese Weise einer unerwünschten Leckage entgegengewirkt wird. Auch diese Maßnahme trägt somit zu einem höheren Wirkungsgrad des Kraftstoffsystems bei.

Zur Betätigung des zweiten Ventils wirkt der Steuerkolben bevorzugt mit einem weiteren Stellglied zusammen, das bolzenförmig ausgeführt ist und einen hohlzylinderförmigen Ventilkolben des zweiten Ventils durchsetzt. Mit Hilfe des bolzenförmigen Stellglieds kann der Ventilkolben aus seinem Ventilsitz gehoben werden, um das zweite Ventil zu öffnen, so dass Druck im Gas-Rail abgebaut wird. Das bolzenförmige Stellglied weist hierzu bevorzugt einen Bund auf, der mit dem Ventilkolben anschlagbildend zusammenwirkt. Der Bund ist dabei auf der dem Steuerkolben abgewandten Seite des Ventilkolbens angeordnet. Weiterhin bevorzugt ist der Ventilkolben mittels der Federkraft einer Feder gegen den Bund axial vorgespannt. Das bolzenförmige Stellglied wiederum ist bevorzugt mittels der Federkraft einer weiteren Feder gegen den Steuerkolben axial vorgespannt. Dadurch ist sichergestellt, dass das Stellglied der Bewegung des Steuerkolbens folgt, wenn dieser in seine Ausgangslage zurückgestellt wird, wobei das Stellglied den Ventilkolben aus seinem Ventilsitz hebt.

Als weiterbildende Maßnahme wird vorgeschlagen, dass das bolzenförmig ausgeführte Stellglied an seinem den Ventilkolben überragenden Ende einen Führungszapfen aufweist, der in eine als Sackloch ausgebildete Führungsbohrung eingreift. Durch die Ausführung der Führungsbohrung als Sackloch, bleibt die Trennung von Gas-Rücklauf und Gas-Zulauf erhalten, in denen prinzipbedingt unterschiedliche Drücke herrschen. Die Führungsbohrung zu Aufnahme des Führungszapfens des bolzenförmigen Stellglieds ist vorzugsweise im Ventilkörper ausgebildet, der auch den Ventilsitz des zweiten Ventils und/oder den Gas-Rücklauf ausbildet.

Gemäß einer bevorzugten Ausgestaltung der Erfindung weist das erste Ventil einen in axialer Richtung hin- und herbeweglichen Ventilstößel auf, der durch die Federkraft einer Feder gegen einen Ventilsitz des ersten Ventils axial vorgespannt ist. Das erste Ventil kann beispielsweise als einfaches Rückschlagventil ausgeführt sein. Auf diese Weise können die Kosten zur Herstellung der Ventilanordnung gesenkt werden.

Ferner wird vorgeschlagen, dass der Steuerraum über einen Druckmittel-Zulauf mit integrierter Zulaufdrossel mit einem Druckmittel beaufschlagbar und über einen Druckmittel-Ablauf mit integriertem Druckmittel-Absteuerventil entlastbar ist. Über den Zulauf und Ablauf des Druckmittels aus dem Steuerraum ist somit der auf den Steuerkolben lastende Steuerdruck einstellbar. Vorzugsweise handelt es sich bei dem Druckmittel um ein hydraulisches Druckmittel, beispielsweise Flüssigkraftstoff, insbesondere Dieselkraftstoff, da derartige hydraulische Druckmittel in der Regel ohnehin vorhanden sind bzw. mitgeführt werden.

Um eine sichere Medientrennung zwischen dem gasförmigen Kraftstoff und dem Druckmittel zu bewirken, wird in Weiterbildung der Erfindung vorgeschlagen, dass ein Dichtelement zur Medientrennung vorgesehen ist. Auf diese Weise kann verhindert werden, dass sich der gasförmige Kraftstoff mit dem anderen Medium mischt. Das Dichtelement ist vorzugsweise als Well- oder Faltenbalg ausgeführt, da derartige Dichtelemente Hubbewegungen eines hubbeweglichen Bauteils zulassen. Denn weiterhin vorzugsweise ist das Dichtelement einerseits am Steuerkolben, andererseits gehäuseseitig befestigt, um den Gas-Bereich von dem Bereich zu trennen, der mit dem vorzugsweise hydraulischen Druckmittel beaufschlagt ist.

Bevorzugte Ausführungsformen der Erfindung werden nachfolgend anhand der beigefügten Zeichnungen näher erläutert. Diese zeigen:
Fig. 1 einen schematischen Längsschnitt durch eine erfindungsgemäße Ventilanordnung gemäß einer ersten bevorzugten Ausführungsform und
Fig. 2 einen schematischen Längsschnitt durch eine erfindungsgemäße Ventilanordnung gemäß einer zweiten bevorzugten Ausführungsform.

### Ausführliche Beschreibung der Zeichnungen

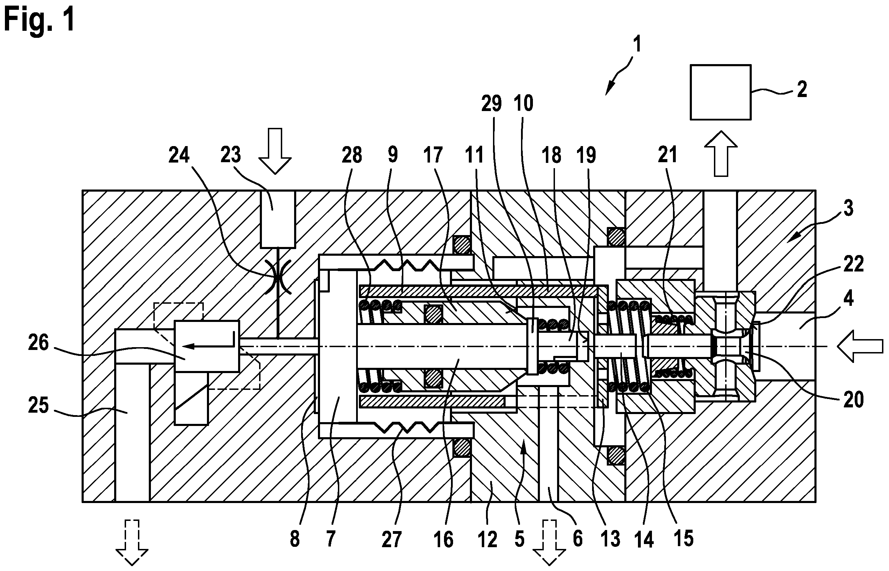

Der Fig. 1 ist eine erste erfindungsgemäße Ventilanordnung 1 zur Gasdruckregelung in einem Gas-Rail 2 eines Kraftstoffsystems zur Versorgung einer Brennkraftmaschine mit einem gasförmigen Kraftstoff zu entnehmen. Bei dem gasförmigen Kraftstoff kann es sich insbesondere um Erdgas handeln. Die dargestellte Ventilanordnung 1 weist hierzu ein erstes Ventil 3 auf, über welches das Gas-Rail 2 mit einem Gas-Zulauf 4 verbindbar ist, sowie ein zweites Ventil 5, das der Verbindung des Gas-Rails 2 mit einem Gas-Rücklauf 6 dient. Durch wahlweises Öffnen und Schließen der beiden Ventile 3, 5 kann der Gasdruck im Gas-Rail 2 angehoben oder gesenkt werden.

Die beiden Ventile 3, 5 sind koaxial angeordnet und werden durch einen ebenfalls koaxial angeordneten Steuerkolben 7 betätigt, der einen Steuerraum 8 begrenzt, der mit einem hydraulischen Druckmittel beaufschlagbar ist. Das Druckmittel wird dem Steuerraum 8 über einen Druckmittel-Zulauf 23 mit integrierter Zulaufdrossel 24 zugeführt, so dass der Zulauf von Druckmittel zu einer Anhebung des Steuerdrucks im Steuerraum 8 führt. Um den Steuerdruck zu senken, wird über ein Druckmittel-Absteuerventil 26 eine Verbindung des Steuerraums 8 mit einem Druckmittel-Ablauf 25 hergestellt. Über den Steuerdruck im Steuerraum 8 kann somit eine auf den Steuerkolben 7 wirkende hydraulische Druckkraft realisiert werden, die zu einer Hubbewegung des Steuerkolbens 7 führt. Am Steuerkolben 7 ist ein als Faltenbalg ausgeführtes Dichtelement 27 angeordnet, um die erforderliche Medientrennung zwischen dem Steuerraum 8 und dem Gas-Rail 2 zu bewirken.

Bei einem Druckanstieg im Steuerraum 8 bewegt sich der Steuerkolben 7 in Richtung der beiden Ventile 3, 5. Dabei führt er ein bolzenförmiges Stellglied 16 mit, das einen hubbeweglichen Ventilkolben 17 des zweiten Ventils 5 durchsetzt. Der Ventilkolben 17 ist mittels der Federkraft einer Feder 28 gegen einen Bund 29 des bolzenförmigen Stellglieds 16 axial vorgespannt, so dass sich mit dem Stellglied 16 auch der Ventilkolben 17 bewegt, bis er zur Anlage an einem Ventilsitz 11 des zweiten Ventils 5 gelangt und das zweite Ventil 5 schließt. An den Bund 29 schließt sich ein Führungszapfen 18 an, der in eine Führungsbohrung 19 eines Ventilkörpers 12 eintaucht und somit das bolzenförmige Stellglied 16 einschließlich des Ventilkolbens 17 führt. Die Führungsbohrung 19 ist als Sackloch ausgeführt, so dass der Gas-Zulauf 4 vom Gas-Rücklauf 6 weiterhin getrennt bleibt. Denn der Ventilkörper 12 bildet nicht nur die Führungsbohrung 19, sondern ferner den Ventilsitz 11 sowie den Gas-Rücklauf 6 aus.

Mit Schließen des zweiten Ventils 5 wird die Bewegung des Steuerkolbens 7 fortgesetzt, um in der Folge das erste Ventil 3 zu öffnen. Hierbei wirkt der Steuerkolben 7 mit einem abschnittsweise hülsenförmigen Stellglied 9 zusammen, welches das zweite Ventil 5 umgibt und in axialer Richtung überragt. An seinem dem Steuerkolben 7 abgewandten Ende weist das abschnittsweise hülsenförmige Stellglied 9 eine Platte 13 mit einem mittig angeordneten Bolzen 14 zur Kontaktierung eines Ventilstößels 20 des ersten Ventils 3 auf. Während des Schließens des zweiten Ventils 5 führt das abschnittsweise hülsenförmige Stellglied 9 zunächst einen Freihub aus, bis der Bolzen 14 den Ventilstößel 20 kontaktiert. Über den Bolzen 14 wird dann im weiteren Verlauf der Ventilstößel 20 entgegen der Federkraft einer Feder 21 aus einem Ventilsitz 22 gehoben. Erst dann öffnet das erste Ventil 3 und im Gas-Rail 2 kann Druck aufgebaut werden.

Um einen Druckabbau im Gas-Rail 2 zu bewirken, wird der Steuerdruck im Steuerraum 8 durch Öffnen des Druckmittel-Absteuerventils 26 gesenkt. Der Steuerkolben 7 wird dann über die Federkraft einer weiteren Feder 15, welche an der Platte 13 des abschnittsweise hülsenförmigen Stellglieds 9 abgestützt ist, und der am Steuerkolben 7 anstehenden Druckdifferenz zwischen dem Gas-Rail 2 und dem Steuerraum 8 in seine Ausgangslage zurückgestellt. Gleiches gilt für das abschnittsweise hülsenförmige Stellglied 9. Dabei löst sich der Bolzen 14 vom Ventilstößel 20 des ersten Ventils 3, so dass die Feder 21 den Ventilstößel 20 in den Ventilsitz 22 zu ziehen vermag und das erste Ventil 3 schließt. Die Rückstellung des Steuerkolbens 7 ist damit noch nicht beendet, so dass im weiteren Verlauf der Bewegung des Steuerkolbens 7 der Bund 29 des bolzenförmigen Stellglieds 16 zur Anlage am Ventilkolben 17 gelangt und diesen aus dem Ventilsitz 11 hebt, so dass in der Folge das zweite Ventil 5 geöffnet wird.

Das mit dem Steuerkolben 7 zusammenwirkende, abschnittsweise hülsenförmige Stellglied 9 weist angrenzend an die Platte 13 einen Abschnitt auf, der durch mehrere, in gleichem Winkelabstand zueinander angeordnete Führungsstangen 10 ausbildet wird. Die Führungsstangen 10 sind durch den Ventilkörper 12 hindurchgeführt, wobei die Winkellage derart gewählt ist, dass das Stellglied 9 nicht den Gas-Rücklauf 6 schneidet. Gas-Zulauf 4 und Gas-Rücklauf 6 bleiben somit weiterhin getrennt.

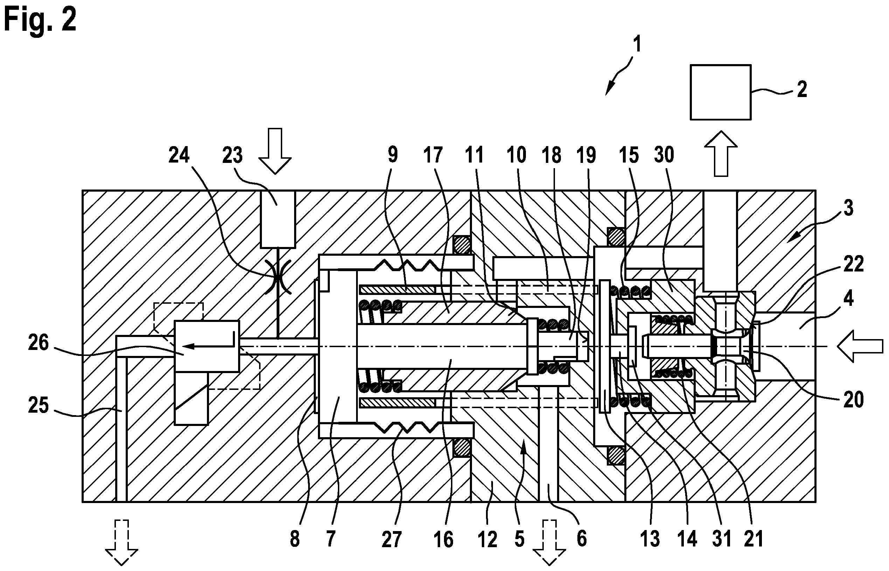

Eine zweite erfindungsgemäße Ventilanordnung 1 zur Gasdruckregelung in einem Gas-Rail 2 ist der Fig. 2 zu entnehmen. Hier ist die Platte 13 des abschnittsweise hülsenförmig ausgebildeten Stellglieds 9 als separates Bauteil ausgeführt, wodurch sich die Herstellung des Stellglieds 9 vereinfacht. Mittels der Federkraft der Feder 15 ist die Platte 13 gegen die Führungsstangen 10 des abschnittsweise hülsenförmigen Stellglieds 9 axial vorgespannt. Eine Führung der Platte 13 wird über den Bolzen 14 bewirkt, der hierzu einen gehäuseseitig abgestützten Haltekörper 30 durchgreift. Der Hub der Platte 13 wird durch einen endseitig am Bolzen 14 angeordneten Bund 31 begrenzt.

## Patentansprüche

1. Ventilanordnung (1) zur Gasdruckregelung in einem Gas-Rail (2) eines Kraftstoffsystems zur Versorgung einer Brennkraftmaschine mit einem gasförmigen Kraftstoff, insbesondere mit Erdgas, umfassend ein erstes Ventil (3) zur Verbindung des Gas-Rails (2) mit einem Gas-Zulauf (4) und ein zweites Ventil (5) zur Verbindung des Gas-Rails (2) mit einem Gas-Rücklauf (6), wobei erstes und zweites Ventil (3, 5) koaxial angeordnet und zumindest mittelbar über einen gemeinsamen Steuerkolben (7) betätigbar sind, der einen Steuerraum (8) begrenzt, und der Steuerkolben (7) zur Betätigung des ersten Ventils (3) mit einem abschnittsweise hülsenförmig ausgeführten Stellglied (9) zusammenwirkt, welches das zweite Ventil (5) umgibt und in axialer Richtung überragt,
**dadurch gekennzeichnet, dass** das abschnittsweise hülsenförmig ausgeführte Stellglied (9) auf seiner dem Steuerkolben (7) abgewandten Seite eine Platte (13) aufweist oder mit einer Platte (13) wirkverbunden ist und über die Federkraft einer Feder (15) gegen den Steuerkolben (7) axial vorgespannt ist, wobei die Feder (15) an der Platte (13) abgestützt ist, so dass die Federkraft der Feder (15) mittelbar über die Platte (13) auf das Stellglied (9) übertragen wird.

2. Ventilanordnung (1) nach Anspruch 1,
**dadurch gekennzeichnet, dass** das abschnittsweise hülsenförmig ausgeführte Stellglied (9) einen Führungsabschnitt besitzt, der aus mehreren, vorzugsweise in gleichem Winkelabstand zueinander angeordneten Führungsstangen (10) gebildet wird, die einen Ventilsitz (11) für das zweite Ventil (5) ausbildenden Ventilkörper (12) durchsetzen.

3. Ventilanordnung (1) nach einem der vorhergehenden Ansprüche,
**dadurch gekennzeichnet, dass** der Steuerkolben (7) zur Betätigung des zweiten Ventils (5) mit einem weiteren Stellglied (16) zusammenwirkt, das bolzenförmig ausgeführt ist und einen hohlzylinderförmigen Ventilkolben (17) des zweiten Ventils (5) durchsetzt, der hin- und herbeweglich auf dem Stellglied (16) geführt ist.

4. Ventilanordnung (1) nach Anspruch 3,
**dadurch gekennzeichnet, dass** das bolzenförmig ausgeführte Stellglied (16) einen Bund (17) aufweist, der mit dem Ventilkolben (17) anschlagausbildend zusammenwirkt.

5. Ventilanordnung (1) nach Anspruch 3 oder 4,
**dadurch gekennzeichnet, dass** das bolzenförmig ausgeführte Stellglied (16) an seinem den Ventilkolben (17) überragenden Ende einen Führungszapfen (18) aufweist, der in eine als Sackloch ausgebildete Führungsbohrung (19) eingreift, die vorzugsweise im Ventilkörper (12) ausgebildet ist.

6. Ventilanordnung (1) nach einem der vorhergehenden Ansprüche,
**dadurch gekennzeichnet, dass** das erste Ventil (3) einen in axialer Richtung hin- und herbeweglichen Ventilstößel (20) aufweist, der durch die Federkraft einer Feder (21) gegen einen Ventilsitz (22) axial vorgespannt ist.

7. Ventilanordnung (1) nach einem der vorhergehenden Ansprüche,
**dadurch gekennzeichnet, dass** der Steuerraum (8) über einen Druckmittel-Zulauf (23) mit integrierter Zulaufdrossel (24) mit einem Druckmittel beaufschlagbar und über einen Druckmittel-Ablauf (25) mit integriertem Druckmittel-Absteuerventil (26) entlastbar ist.

8. Ventilanordnung (1) nach einem der vorhergehenden Ansprüche,
**dadurch gekennzeichnet, dass** ein Dichtelement (27) zur Medientrennung vorgesehen ist, dass vorzugsweise als Well- oder Faltenbalg ausgeführt ist und weiterhin vorzugsweise einerseits am Steuerkolben (7), andererseits gehäuseseitig befestigt ist.

## Claims

1. Valve arrangement (1) for gas pressure regulation in a gas rail (2) of a fuel system for supplying gaseous fuel, in particular natural gas, to an internal combustion engine, comprising a first valve (3) for connecting the gas rail (2) to a gas feed line (4) and a second valve (5) for connecting the gas rail (2) to a gas return line (6), wherein the first and second valves (3, 5) are arranged coaxially and are operable at least indirectly by means of a common control piston (7) that delimits a control chamber (8), and the control piston (7), in order to operate the first valve (3), interacts with a sectionally sleeve-like actuating element (9) that surrounds the second valve (5) and projects beyond the latter in an axial direction,
**characterized in that** the sectionally sleeve-like actuating element (9), on its side averted from the control piston (7), has a plate (13) or is operatively connected to a plate (13) and is axially preloaded by means of the spring force of a spring (15) against the control piston (7), wherein the spring (15) is supported on the plate (13) such that the spring force of the spring (15) is transmitted indirectly via the plate (13) to the actuating element (9).

2. Valve arrangement (1) according to Claim 1,
**characterized in that** the sectionally sleeve-like actuating element (9) has a guide section formed from multiple guide rods (10) which are preferably arranged at equal angular intervals with respect to one another and which extend through valve bodies (12) that form a valve seat (11) for the second valve (5).

3. Valve arrangement (1) according to either one of the preceding claims,
**characterized in that** the control piston (7), in order to operate the second valve (5), interacts with a further, bolt-like actuating element (16) that extends through a hollow cylindrical valve piston (17) of the second valve (5), which valve piston (17) is guided so as to be movable in reciprocating fashion on the actuating element (16).

4. Valve arrangement (1) according to Claim 3,
**characterized in that** the bolt-like actuating element (16) has a collar (17) that interacts with the valve piston (17) so as to form a stop.

5. Valve arrangement (1) according to Claim 3 or 4,
**characterized in that** the bolt-like actuating element (16), at its end projecting beyond the valve piston (17), has a guide peg (18) that engages into a guide bore (19) formed as a blind bore, which guide bore (19) is preferably formed in the valve body (12).

6. Valve arrangement (1) according to any one of the preceding claims,
**characterized in that** the first valve (3) has a valve plunger (20) which is movable in reciprocating fashion in an axial direction and which is axially preloaded against a valve seat (22) by the spring force of a spring (21) .

7. Valve arrangement (1) according to any one of the preceding claims,
**characterized in that** the control chamber (8) can be pressurized with a pressure medium via a pressure medium feed line (23) with an integrated feed line throttle (24) and can be relieved of pressure via a pressure medium outlet line (25) with an integrated pressure medium discharge valve (26).

8. Valve arrangement (1) according to any one of the preceding claims,
**characterized in that** a sealing element (27) is provided for the purposes of separating media and is preferably designed as an undulating or corrugated bellows and is furthermore preferably fastened to the control piston (7), on the one hand, and so as to be proximal to the housing, on the other hand.

## Revendications

1. Ensemble formant soupape (1) servant à réguler la pression de gaz dans une rampe de distribution de gaz (2) d'un système de carburant destiné à alimenter un moteur à combustion interne en un carburant gazeux, en particulier en gaz naturel, comprenant une première soupape (3) destinée à relier la rampe de distribution de gaz (2) à une arrivée de gaz (4) et une deuxième soupape (5) destinée à relier la rampe de distribution de gaz (2) à un retour de gaz (6), la première et la deuxième soupape (3, 5) étant disposées coaxialement et pouvant être actionnées au moins indirectement par un piston de commande (7) commun qui délimite un espace de commande (8), et le piston de commande (7) coopérant avec un actionneur (9) réalisé par endroits en forme de douille pour actionner la première soupape (3), qui entoure la deuxième soupape (5) et la dépasse dans la direction axiale,
**caractérisé en ce que** l'actionneur (9) réalisé par endroits en forme de douille présente sur sa face détournée du piston de commande (7) une plaque (13) ou est en relation active avec une plaque (13) et est axialement précontraint contre le piston de commande (7) par la force de ressort d'un ressort (15), le ressort (15) prenant appui sur la plaque (13) de sorte que la force de ressort du ressort (15) est transmise indirectement à l'actionneur (9) par l'intermédiaire de la plaque (13).

2. Ensemble formant soupape (1) selon la revendication 1, **caractérisé en ce que** l'actionneur (9) réalisé par endroits en forme de douille possède une partie de guidage qui est formée à partir de plusieurs barres de guidage (10) disposées les unes par rapport aux autres de préférence à la même distance angulaire et qui traversent des corps de soupape (12) qui forment un siège de soupape (11) pour la deuxième soupape (5).

3. Ensemble formant soupape (1) selon l'une quelconque des revendications précédentes, **caractérisé en ce que** le piston de commande (7), pour actionner la deuxième soupape (5), coopère avec un autre actionneur (16) qui est réalisé en forme de boulon et traverse un piston de soupape (17) en forme de cylindre creux de la deuxième soupape (5) qui est guidé mobile en va-et-vient sur l'actionneur (16).

4. Ensemble formant soupape (1) selon la revendication 3, **caractérisé en ce que** l'actionneur (16) réalisé en forme de boulon présente un collet (17) qui coopère avec le piston de soupape (17) en réalisant une butée.

5. Ensemble formant soupape (1) selon la revendication 3 ou 4, **caractérisé en ce que** l'actionneur (16) réalisé en forme de boulon présente à son extrémité dépassant du piston de soupape (17) un tenon de guidage (18) qui vient en prise dans un alésage de guidage (19) réalisé comme un trou borgne et réalisé de préférence dans le corps de soupape (12).

6. Ensemble formant soupape (1) selon l'une quelconque des revendications précédentes, **caractérisé en ce que** la première soupape (3) présente un poussoir de soupape (20) mobile en va-et-vient dans la direction axiale et qui est axialement précontraint contre un siège de soupape (22) par la force de ressort d'un ressort (21).

7. Ensemble formant soupape (1) selon l'une quelconque des revendications précédentes, **caractérisé en ce que** l'espace de commande (8) peut être chargé par un fluide sous pression à travers une arrivée de fluide sous pression (23) à étrangleur d'arrivée intégré (24) et peut être déchargé par un écoulement de fluide sous pression (25) à soupape de commande de sortie de fluide sous pression intégrée (26).

8. Ensemble formant soupape (1) selon l'une quelconque des revendications précédentes, **caractérisé en ce qu'**un élément d'étanchéité (27) est prévu pour séparer les fluides et est réalisé de préférence comme un soufflet ondulé ou plissé et est en outre de préférence fixé d'une part au piston de commande (7) et d'autre part côté boîtier.
